# EUROPEAN PATENT APPLICATION

(11) **EP 4 625 764 A1**
(43) Date of publication of application: **01.10.2025**
(21) Application number: 24166403.6
(22) Date of filing: 26.03.2024
(51) Int. Cl.: H02K 1/14, H02K 3/52, H02K 15/12

(54) **STATOR TOOTH UNIT FOR SEGMENTED STATOR**

(71) Applicant: Borgwarner Inc., Auburn Hills, Michigan 48326 (US)
(72) Inventor: METZ, Dietmar, 67149 Meckenheim (DE); GUERREIRO, Tito, 2820-665 Charneca de Caparica (PT); NELSON, Cristina, 2820-804 Serra de Carnaxide (PT)
(74) Representative: Peterreins Schley

(57) **Abstract**

The present disclosure relates to a stator tooth unit (10) for a stator (110). The stator having an axis (111) and a plurality of stator tooth units (10) which are circumferentially arranged around the axis (111). The stator tooth unit (10) comprises a stator tooth (20), an insulation (30), and a coil (40). The stator tooth (20) defines a radially outer side (20a) and a radially inner side (20b). The radially inner side (20b) is opposite to the radially outer side (20a). The stator tooth (20) further defines a first circumferential side (20c) and a second circumferential side (20d). The second circumferential side (20d) is opposite to the first circumferential side (20c). The insulation (30) is at least partially covering the stator tooth (20). The coil (40) is wound around the partially covered stator tooth (20). The insulation (30) comprises an insulation wall (32) which extends away from the stator tooth (20) on the first and second circumferential sides (20c, 20d). The insulation wall (32) comprises a sealing structure (54, 56) on at least one circumferential side (20c, 20d). The sealing structure (54, 56) is configured to form a sealing (50) with the insulation wall (32) of an adjacent stator tooth unit (10).

## Description

### Technical Field

The present disclosure relates to a stator tooth unit for a stator, and to a stator comprising a plurality of stator tooth units. Furthermore, the present disclosure relates to a stator arrangement comprising the stator and to an electrical machine comprising the stator arrangement. The present disclosure further describes a method of manufacturing a stator arrangement comprising a plurality of stator tooth units.

### Background

Electrical machines have been used in various technical fields for the generation of kinetic energy for many decades. An electrical machine is an electrical device that is configured to convert electrical energy into mechanical energy (also called an electric motor or e-motor), or vice versa (also referred to as electric generator). The mechanical energy may, in turn, be used to generate kinetic energy that may be utilized to drive other devices. An electric motor may generally comprise a stator and a rotor, which are housed in a motor casing. The stator may be fixed in position and the rotor may move relative to the stator. Commonly the rotor is rotatably fixed on a shaft that rotates with the rotor. The shaft may be used to transmit rotational energy to other devices. Most electric motors generate energy with a magnetic field and a winding current.

Depending on the configuration, electrical machines may be configured, for instance, as radial flux machines or axial flux machines. In radial flux machines, the rotor usually comprises a cylindrical body whose circumference carries magnets. The stator is usually hollow cylindrical and surrounds the rotor at a radial distance. Radial flux machines of this type are also known as radial flux machines with an internal rotor (or radial flux machines with an external stator). Alternatively, radial flux machines can also be designed with an external rotor. This means that the stator is on the inside and is surrounded by a hollow cylindrical rotor. On its radially inner side (with an internal rotor) or radially outer side (with an external rotor), the stator has several circumferentially distributed winding elements. Each winding element comprises a stator tooth which extends radially from a stator yoke towards the rotor. The stator tooth is wound by a wire of a metallic, good conducting material such as copper to form the winding. When an electric current is applied to the windings, the rotor attached to the shaft of the motor is subjected to a torque resulting from the magnetic field. The magnetic flux generated by the magnetic field being a radial flux in a radial flux machine. The group of the rotor fixed on the shaft may be referred to as rotor assembly. Usually, the rotor assembly is rotatably supported by bearings in a housing of the electric machine.

The constant further development of electric motors and the trend towards using electric current as an energy carrier and source is leading to a continuous expansion of the application portfolio of electric motors. Electric motors are not only used in small electronic devices such as notebooks or household appliances, which are usually operated in the low-voltage range. Increasingly, electric motors of larger dimensions are also being used in the high-voltage range with operating voltages of up to 800 volts or 850 volts and more.

Electric motors, specifically in high-voltage applications, for instance traction motors for vehicles such as cars, typically generate excessive heat during operation. In operation of an electric motor, heat may for instance be generated in the windings of the stator. Another challenge may be seen in electrically insulating the windings from its surroundings. Known solutions to insulate windings and to conduct heat to the stator housing include potting the stator in the stator housing. However, using stator potting for the production is labor intensive and requires various manufacturing tools and steps.

The object of the present disclosure is to provide an insulated stator which can be produced more efficiently.

### Summary

The present disclosure relates to a stator tooth unit for a stator as defined in claim 1. The present disclosure further relates to stator with a plurality of such stator tooth units as defined in claim 8 and a stator arrangement comprising such a stator according to claim 10. According to claim 13, the present disclosure relates to an electrical machine comprising such a stator arrangement. According to claim 14, the present disclosure describes a method of manufacturing such a stator arrangement. The dependent claims depict advantageous embodiments of the present disclosure.

According to a first aspect, the present invention relates to a stator tooth unit for a stator. The stator having an axis and a plurality of stator tooth units which are circumferentially arranged around the axis. The stator tooth unit comprises a stator tooth, an insulation, and a coil. The stator tooth defines a radially outer side and a radially inner side. The radially inner side is opposite to the radially outer side. The stator tooth further defines a first circumferential side and a second circumferential side. The second circumferential side is opposite to the first circumferential side. The insulation is at least partially covering the stator tooth. The coil is wound around the partially covered stator tooth. The insulation comprises an insulation wall which extends away from the stator tooth on the first and second circumferential sides. The insulation wall comprises a sealing structure on at least one circumferential side. The sealing structure is configured to form a sealing with the insulation wall of an adjacent stator tooth unit. By the provision of an insulation wall on the stator tooth, a complex and large molding tooling for potting the stator in a stator housing can be dispensed with. This is possible due to the circumferential extension of the insulation walls and their function to form a seal with an adjacent stator tooth unit. In other words, the insulation wall of the stator tooth unit provides a portion of a boundary for filling resin into stator during potting of the stator in the stator housing. Therefore, less tooling equipment for potting is required. Particularly, no preparation and cleaning of molding tools and no demolding is required. In summary, the provided stator tooth unit enables a more efficient production of a stator arrangement and electrical machine.

In embodiments, the insulation wall may be located adjacent to one of the radially outer side or the radially inner side. In other words, the stator tooth unit may be configured for a radially inner stator (i.e., the insulation wall is arranged adjacent the radially outer side) or a radially outer stator (i.e., the insulation wall is arranged adjacent the radially inner side).

In embodiments, the insulation wall may extend axially along the stator tooth at least along an axial thickness of the stator tooth. The axial thickness of the stator tooth may be defined between a first axial surface (may also be referred to as upper axial surface) and a second axial surface (may also be referred to as lower axial surface) of the stator tooth. By extending at least along an axial thickness of the stator tooth, a sealing and potting boundary for at least an axial height of the stator tooth can be provided.

In embodiments, the insulation wall may extend axially above stator tooth. In embodiments, the insulation wall may extend axially below the stator tooth. Specifically, the insulation wall may extend axially above and below the stator tooth. For example, the insulation wall may extend away from the stator tooth on a first axial side (i.e. axially above the stator tooth) and/or on a second axial side (i.e. axially below the stator tooth). More specifically, the insulation wall may extend away from the first axial surface (i.e. axially above the stator tooth) and/or the second axial surface (i.e. axially below the stator tooth). For instance, the insulation wall may extend at least above and/or below the stator tooth surfaces to extend axially over coil turns of the coil which are arranged on the first and second axial sides. By extending axially above the stator tooth, the insulation wall may define a first edge being arranged on the first axial side. By extending axially below the stator tooth, the insulation wall may define a second edge being arranged on the second axial side. These edges may define respective ends of the insulation wall in the axial direction and may therefore be referred to as axial edges. In embodiments, the first axial edge and/or the second axial edge may substantially extend in a circumferential direction.

In embodiments, the sealing structure may extend at least along an axial thickness of the insulation wall. Particularly, the sealing structure may extend from the first axial edge to the second axial edge of the insulation wall. By extending at least along an axial thickness of the insulation wall, a sealing and potting boundary for at least an axial height of the stator tooth, more specifically at least an axial thickness of the insulation wall can be provided.

In embodiments, the sealing structure may comprise a first sealing structure which is arranged on the first circumferential side of the insulation wall and a second sealing structure which is arranged on the second circumferential side of the insulation wall. More specifically, the insulation wall may comprise two side edges. A first side edge being arranged on the first circumferential side. A second side edge being arranged on the second circumferential side. The side edges may define respective ends of the insulation wall in the circumferential direction, and may therefore also be referred to as circumferential edges. In embodiments, the side edges may extend substantially in the axial direction. In some embodiments the circumferential edges may be inclined with respect to the axial direction, for instance by up to 30°. Specifically, the circumferential edges of the insulation wall may be parallel to each other.

The sealing structures may be formed in the circumferential edges or may represent the circumferential edges.

In embodiments, the first sealing structure may be configured to form the sealing with the second sealing structure of an adjacent stator tooth unit.

In some embodiments, the first sealing structure may be configured to conjointly hold a separate sealing element with the second sealing structure of an adjacent stator tooth unit such that the first sealing structure of the stator tooth unit, the separate sealing element and the second sealing structure of an adjacent stator tooth unit conjointly form the sealing. In embodiments, at least one of the first and second sealing structures may comprise a sealing groove for receiving the separate sealing element.

In some embodiments, the first sealing structure may comprise a flexible sealing lip which is configured to be pressed against the second sealing structure of an adj acent stator tooth. In some embodiments, the second sealing structure may, for instance, provide a support surface against which the flexible sealing lip may be pressed. In alternative embodiments, the flexible sealing lip may be provided at the second sealing structure and the first sealing structure may provide the support structure. In some embodiments both sealing structures may comprise a flexible sealing lip which may be pressed against a sealing lip of an adjacent stator tooth unit.

In some embodiments, the first sealing structure may comprise a sealing groove and the second sealing structure comprises a sealing protrusion. The sealing groove and the sealing protrusion may be configured to sealingly engage with the sealing protrusion and sealing groove of an adjacent stator tooth unit, respectively.

In embodiments, the stator tooth unit may further comprise a first engagement structure being formed on the first circumferential side and a second engagement structure being formed on the second circumferential side. The engagement structures may be configured to engage a respectively adjacent stator tooth unit. For example, the first engagement structure may be configured to engage a second engagement structure of an adjacent stator tooth unit. The second engagement structure may be configured to engage a first engagement structure of an adjacent stator tooth unit. In embodiments in which the insulation wall is located adjacent to one of the radially outer side or the radially inner side, the engagement structures may be located adjacent to the other of the radially outer side or the radially inner side. In other words, the stator tooth unit may be configured for a radially inner stator (i.e., the engagement structures are located adjacent the radially inner side) or a radially outer stator (i.e., the engagement structures are located adjacent the radially outer side).

In embodiments, the engagement structures may be provided in the stator tooth and may be configured to engage the stator tooth of an adjacent stator tooth unit.

In embodiments, the first engagement structure and the second engagement structure may be complementary formed and configured to form-fittingly engage the stator tooth of an adjacent stator tooth unit. Specifically, the engagement structures may be configured to secure adjacent stator tooth units circumferentially (i.e. against relative circumferential movement). At least when several stator tooth units are engaged such that a ring, i.e. a stator or segmented is formed, the engagement structures may also secure the stator tooth units against radial movement. More specifically, the first engagement structure may engage a second engagement structure of a stator tooth which is adjacent in a first circumferential direction. The second engagement structure may engage a first engagement structure of another stator tooth which is adjacent in a second circumferential direction which is opposite to the first circumferential direction. The form fitting engagement enables an easy assembly of several stator tooth units to form a stator. Furthermore, the form fitting engagement may provide for a retention force against radial forces during operation of the stator.

In embodiments, the first engagement structure may protrude from the stator tooth on a side surface of the stator tooth on the first circumferential side. In embodiments, the first engagement structure may extend axially along the stator tooth, particularly along the axial thickness of the stator tooth.

In embodiments, the second engagement structure may be recessed in the stator tooth on a side surface of the stator tooth on the second circumferential side. In embodiments, the second engagement structure may extend axially along the stator tooth, particularly along the axial thickness of the stator tooth.

In embodiments, the stator tooth may comprise a stack of metal laminations which define the axial thickness between a first axial surface and an opposing second axial surface of the stator tooth.

In embodiments, the stator tooth may be double T-shaped having a central tooth web between a radially outer portion and a radially inner portion.

In embodiments, the insulation may be an overmolded plastic part. In examples, a material of the insulation may comprise polyamide or fibre reinforced polyamide, e.g., a glass fibre reinforced polymer. In some examples, the material of the insulation may comprise PA66. In some embodiments the material may comprise 20% to 40%, for instance 30% glass fibre. The percentage may refer to weight percent of the material of the insulation.

In embodiments, the insulation may further comprise a coil insulation portion which is arranged between the coil and the stator tooth. Specifically the coil insulation portion may be arranged at least on the central tooth web. In embodiments, the coil insulation portion may comprise radially inner and/or radially outer coil stops which are configured to keep the coil in the central tooth web region. In embodiments, the coil stops may be inclined towards the central tooth web region. The coil insulation portion may be configured for electrically insulating the coil with respect to the stator tooth.

In embodiments, the insulation may further comprise a supporting portion. The supporting portion may be configured to support at least one of wire ends of the coil, a lead frame for the stator, and/or electrical connectors for connecting the wire ends of the coil to the lead frame. In embodiments, the supporting portion may comprise a wire end supporting portion a connector supporting portion and/or a lead frame supporting portion.

In a second aspect, the present invention further relates to a stator for an electrical machine. The stator may comprise a plurality of stator tooth units according to the first aspect. The stator tooth units may be circumferentially arranged around the axis of the stator. The insulation walls of adjacent stator tooth units may form a respective sealing and thereby the plurality of stator tooth units conjointly form a closed circumference. As the stator comprises a plurality of stator tooth units, the stator may also be referred to as a "segmented stator".

In embodiments of the stator, the insulation walls of adjacent stator tooth units may conjointly form a radially outer circumferential boundary. The insulation wall of a respective stator tooth unit may be arranged adjacent the radially outer side. In other words, a radially inner stator for a radially outer rotor may be provided. In embodiments of the stator, the engagement structures of adjacent stator tooth units may be engaged such that the stator teeth of adjacent stator tooth units conjointly form a radially inner circumferential boundary. The engagement structures of a respective stator tooth unit may be located adjacent the radially inner side. In other words, a radially inner stator for a radially outer rotor may be provided.

In other embodiments relating to radially outer stators, the insulation walls may be arranged at radially inner portions of the stator teeth to thereby form the radially inner circumferential boundary, and the stator teeth may form the radially outer circumferential boundary via their engaged engagement structures.

In embodiments of the stator, the stator may further comprise a lead frame. The lead frame may be arranged at a lower axial side of the stator tooth units. The lead frame may be electrically connected to the coils. In embodiments, the insulation walls may axially extend at least below the lead frame. In other words, the second axial edges of the insulation walls may extend axially beyond the lead frame. Thereby, an insulation of the coils and the lead frame can be provided with respect to a stator housing and the lead frame can be protected.

In embodiments of the stator, the lead frame may be electrically connected to wire ends of the coils via connectors. In other words, the stator may comprise a plurality of connectors which connect a respective wire end of the coils to the lead frame.

In a third aspect, the present invention further relates to stator arrangement for an electrical machine. The stator arrangement may comprise the stator according to the second aspect, a resin body, and a stator housing. The stator housing may define an annular receiving portion with a first circumferential wall, an annular end wall, and a second circumferential wall. The second circumferential wall may be radially opposite to the first circumferential wall. The stator may be arranged at least partially in the annular receiving portion. In embodiments, the resin body may comprise epoxy resin. In embodiments, the resin body may be configured to securely hold the stator in the stator housing. The resin body may be arranged between the insulation walls and the first circumferential wall. Furthermore, the resin body may be arranged at least at the bottom of the annular receiving portion, i.e. between the stator and the annular end wall. In embodiments of the stator arrangement, the stator teeth may be supported on the first circumferential wall.

In embodiments of the stator arrangement, the insulation walls may be arranged adjacent to the second circumferential wall. The insulation walls may axially extend at least over an overlap portion of the second circumferential wall. The overlap portion may describe a portion of the second circumferential wall over which the insulation walls may axially extend, and may also be referred to as axial overlap portion. The overlap portion is particularly advantageous for potting the stator in the stator housing as it may reduce leakage of liquid resin and may simplify a pre-potting step.

In embodiments comprising an overlap portion, the overlap portion may be 0.5mm to 10mm, specifically 1mm to 5mm. In some embodiments, the overlap portion may be at least 1mm.

In embodiments comprising an overlap portion, the resin body may radially fill space between the insulation walls and the second circumferential wall at least over an axial sub-portion of the overlap portion.

In embodiments comprising an overlap portion, the second circumferential wall may be formed such that at least at an axial position of the overlap portion a radial distance between the insulation walls and the second circumferential wall is at most 2mm, specifically at most 1mm und more specifically at most 0,5mm. In some examples, the radial distance may be at most about 0mm to about 2mm, specifically at most about 0,2mm to about 1mm.

In a fourth aspect, the present invention further relates to an electrical machine. The electrical machine may particularly be an electric motor. The electrical machine may comprise a machine housing, a shaft, a rotor, and a stator arrangement according to the third aspect. The shaft may be rotatably supported in the machine housing. The rotor may be fixedly arranged on the shaft in the machine housing. The stator of the stator arrangement may be arranged adjacently to the rotor in the machine housing.

In embodiments of the electrical machine, the stator may be arranged radially adjacent to the rotor.

In embodiments of the electrical machine, the rotor may be configured as a radially outer rotor. The rotor may comprise a plurality of circumferentially distributed rotor poles which are arranged on a rotor body of the rotor. Specifically, the rotor poles may be arranged radially outside of the stator.

In embodiments of the electrical machine, the machine housing may comprise a rotor housing and the stator housing. The rotor housing and the stator housing may be connected force-fittingly. In examples, the rotor housing and the stator housing may be connected by a screw connection at respective flanges of the stator housing and the rotor housing.

In a fifth aspect, the present invention further relates to a method for manufacturing a stator arrangement. The method may comprise providing a plurality of stator tooth units each having a stator tooth, an insulation with an insulation wall, and a coil wound around the stator tooth. The method may further comprise arranging the stator tooth units circumferentially such that the insulation walls conjointly form a closed circumference to thereby form a stator. The method may further comprise providing a stator housing which defines an annular receiving portion with a first circumferential wall, an annular end wall, and a second circumferential wall radially opposite to the first circumferential wall. The method may further comprise inserting the stator in the annular receiving portion such that an axial portion of the insulation walls is arranged between the first and second circumferential walls. The method may further comprise potting the stator in the stator housing by filling liquid resin between the insulation walls and the first circumferential wall such that after hardening the liquid resin a resin body is formed between the insulation walls and the first circumferential wall.

In embodiments of the method, stator tooth units according to the first aspect may be provided. In particular, the method may relate to manufacturing the stator arrangement according to the third aspect.

In embodiments of the method, before potting a removable sealing may be arranged to seal a gap between the insulation walls and the second circumferential wall.

Alternatively to the removable sealing, potting may comprise pre-potting a first amount of liquid resin to at least partially fill an overlap portion between the insulation walls and the second circumferential wall. The first amount of liquid resin may at least be partially hardened to form a first resin body portion for sealing between the insulation walls and the second circumferential wall. After pre-potting, a second amount of liquid resin may be filled between the insulation walls and the first circumferential wall to form a second resin body portion. The first resin body portion and the second resin body portion may together form the resin body. By this two-step potting approach, a separate potting tool for sealing between the insulation walls and the second circumferential wall can be omitted. Thereby, leakage of liquid resin through gaps between the second circumferential wall and the insulation walls can be prevented. Such leakage could detriment the function of the electric machine in which in the stator arrangement may be used. For instance, excess resin may be pushed through the gap into the machine housing. For instance, during operation, the rotor may come into contact with the excess resin and may eventually be damaged. Furthermore, open potting, i.e. without enclosing potting tools is possible. This may improve the efficiency of the manufacturing process. In embodiments, the first amount may be filled through the gap between the insulation walls and the first circumferential wall and/or between the insulation walls and the first circumferential wall.

In embodiments of the method comprising pre-potting, pre-potting may comprise pre-heating the stator arrangement before filling the second amount of liquid resin to at least partially harden the first amount of liquid resin. Pre-heating may for instance be conducted in an oven. The pre-heating may be controlled such that a sealing function is established. Only pre-hardening the first amount of liquid resin may improve the interface between the first and second resin body portions (e.g. the bonding may be improved). However, in other embodiments, the first amount of liquid resin may also be fully hardened.

In embodiments of the method, potting may be performed with an upper axial surface of the stator teeth pointing in a direction opposite to gravity. In some embodiments, potting may be performed as open potting under vacuum.

In embodiments of the method, the method may further comprise connecting a lead frame via connectors to the stator at a lower axial side of the stator. Connecting may particularly be performed before inserting the stator. Specifically, the lead frame is pressed on the connectors which are inserted into stator, specifically into the connector supporting portions. In embodiments, the lead frame may be attached to the stator in the direction of gravity while the stator is positioned with the lower axial surface pointing in a direction opposite to gravity. In specific embodiments, the stator may be inserted with the lower axial side (i.e. the side of the lead frame) first into the stator housing.

### Brief Description of the Drawings

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **FIG. 1a**: Shows a side cut view of the electrical machine according to the fourth aspect of the present disclosure comprising the stator arrangement of the third aspect with the resin body;
- **FIG. 1b**: Shows the detailed section A of Fig. 1a;
- **FIG. 2a**: Shows the side cut view of Fig. 1a without the resin body;
- **FIG. 2b**: Shows the detailed section A of Fig. 2a;
- **FIG. 3**: Shows an exemplary stator tooth of the stator tooth unit of the first aspect;
- **FIG. 4**: Shows the stator tooth partially covered with the insulation of the stator tooth unit according to the first aspect;
- **FIG. 5**: Shows the stator tooth unit according to the first aspect forming a sealing with an adjacent stator tooth unit.
- **FIG. 6**: Shows a perspective view of a portion of the stator according to the second aspect with a plurality of circumferentially arranged stator tooth units of the first aspect;
- **FIG. 7**: Shows a bottom view of a portion of the stator according to the second aspect with a plurality of circumferentially arranged stator tooth units of the first aspect;
- **FIGs. 8a-8c**: Shows three exemplary embodiments of sealing structures of adjacent stator tooth units;
- **FIG. 9**: Shows a perspective view of the stator according to the second aspect with a plurality of circumferentially arranged stator tooth units of the first aspect;
- **FIG. 10**: Shows a perspective view of the stator according to the second aspect with a lead frame and a connector assembly;
- **FIG. 11**: Shows schematically a flow diagram of a method for manufacturing a stator arrangement according to the fifth aspect;

### Detailed Description

Embodiments of the stator tooth unit, the stator, the stator arrangement, the electrical machine, and the method according to the present disclosure will be described in reference to the drawings as follows.

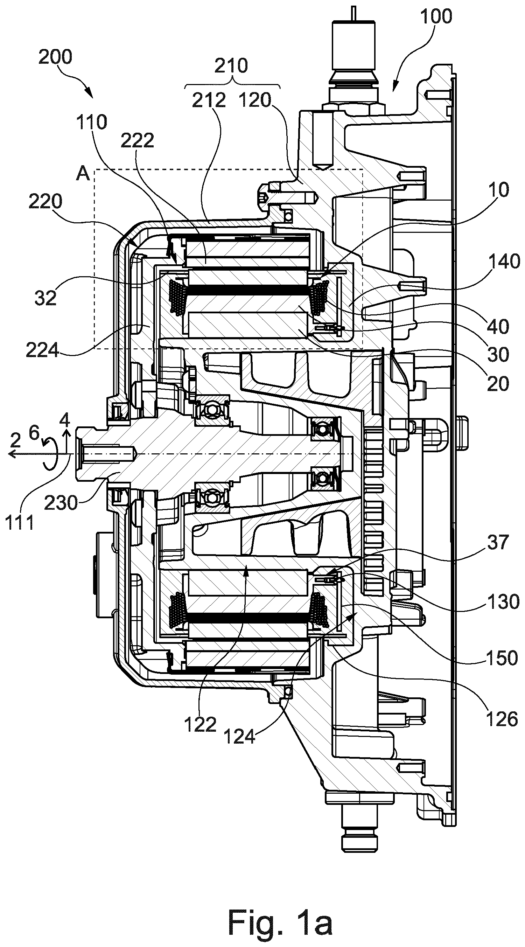

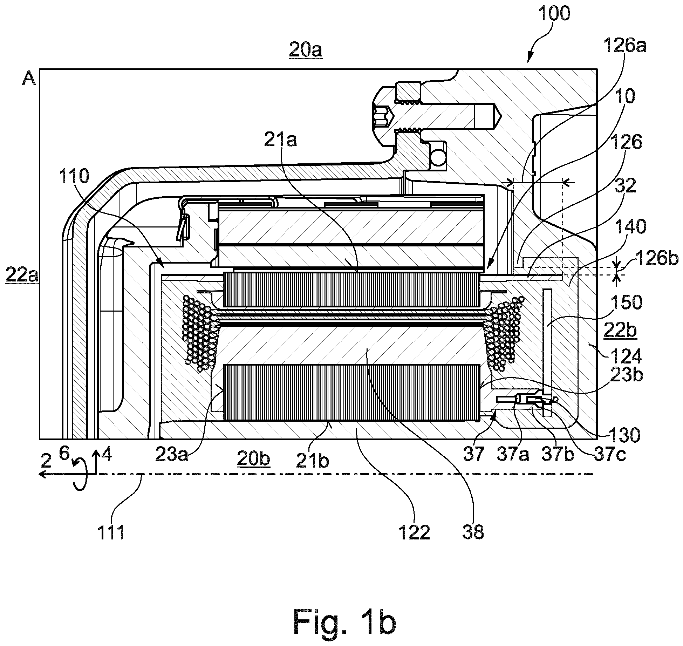

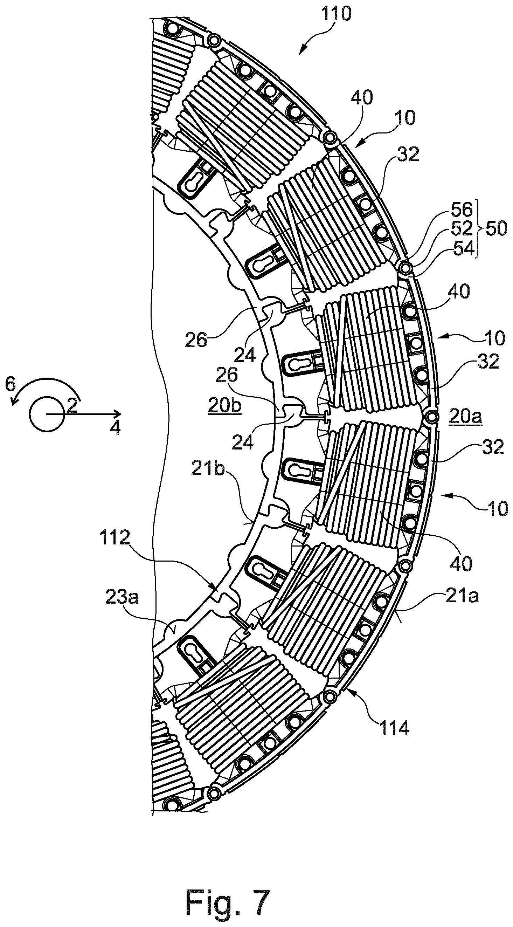

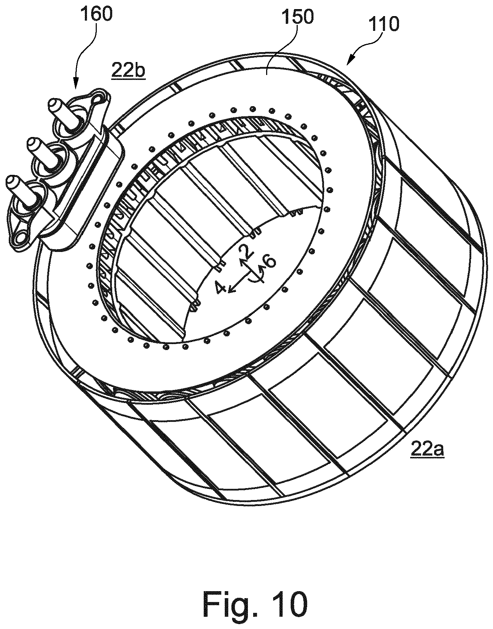

In the context of this application, the expression axial, axially or axial direction refer to a rotation axis of the electrical machine 200 (and/or the rotating shaft 230 and/or the rotor 220) and/or to the axis 111 of the stator 110 comprising a plurality of stator tooth units 10. Therefore, the terms axial, axially or axial direction analogously apply to the stator tooth unit 10. With respect to the figures (see, Figs. 1 to 7, and 9 to 10) the axial direction is denoted by reference sign 2. The expression radial, radially or radial direction is to be understood relative to the axis/axial direction 2 of the electrical machine 200 or the stator 110 and is denoted with the reference sign 4. The expression circumferential, circumferentially, or circumferential direction is to be understood relative to the axis/axial direction 2 of the electrical machine 200 or the stator 110 and is denoted with the reference sign 6. It should be understood that although one respective exemplary direction is shown in the respective figures, the respective counter direction also falls under the respective expression. For instance, Fig. 7 shows the circumferential direction 6 by a counterclockwise oriented arrow. However, a direction clockwise around the axis 2, may also be denoted the circumferential direction 6.

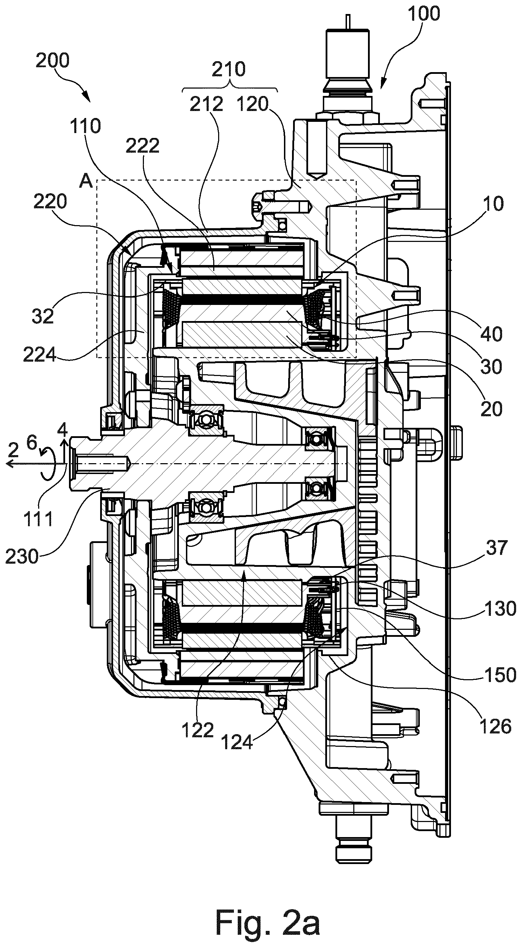

**Figs. 1a** **and** **2a** illustrate an exemplary electrical machine 200 in accordance with the fourth aspect of the present disclosure in a side cut view. The electrical machine 200 comprises a stator arrangement 100 according to the third aspect of the present disclosure, a machine housing 210, a rotor 220, and a shaft 230. Specifically, the depicted electrical machine 200 may be configured as an electric motor. In alternative embodiments, the electrical machine 200 may be an electric generator. In other words, the electrical machine 200 may be an electric motor and/or an electric generator. The shaft 230 may be rotatably supported in the machine housing 210. The rotor 220 may be fixedly arranged on the shaft 230 in the machine housing 210. As further explained below, the stator arrangement 100 may comprise a stator according to the second aspect of the present disclosure. The stator 110 of the stator arrangement 100 may be arranged adjacently to the rotor 220 in the machine housing 210. The stator 110 is arranged radially adjacent to the rotor 220. In more detail, the rotor 220 is distanced from the stator 110 by a radial gap. In other words, the electrical machine 200 may be a radial gap machine or a radial flux machine. In the depicted example, the rotor 220 radially surrounds the stator 110. In other words, the rotor 220 may be configured as a radially outer rotor 220. The rotor 220 may comprise a plurality of circumferentially distributed rotor poles 222 (e.g. magnets 222) which are arranged on a rotor body 224 of the rotor 220. Specifically, the rotor poles 222 may be arranged on a radially inner surface of the rotor 220 and point towards the stator 110. The machine housing 210 may comprise a rotor housing 212 and a stator housing 120. The rotor housing 212 and the stator housing 120 may be, for example, connected force-fittingly. In the depicted example, the rotor housing 212 and the stator housing 120 may be connected by a screw connection at respective flanges of the stator housing 120 and the rotor housing 212.

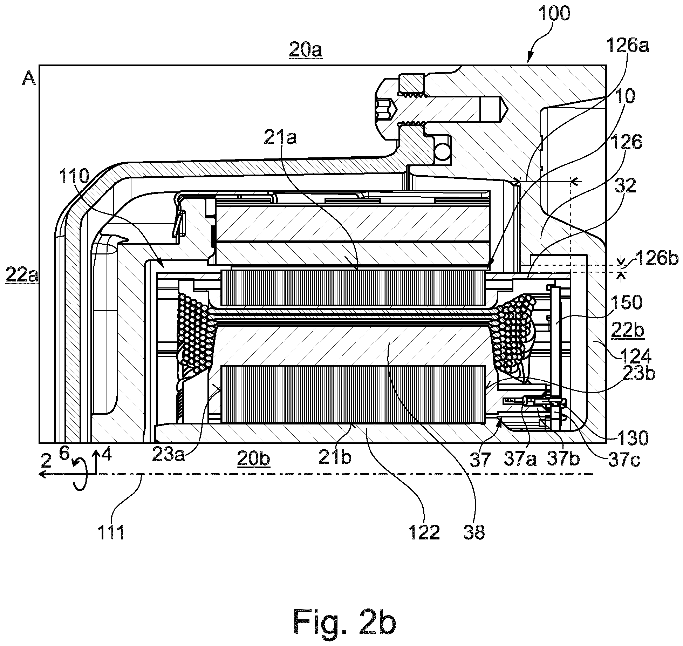

**Figs. 1b** **and** **2b**, show respective detailed section A of **Figs. 1a** **and** **1b**. The difference between **Figs. 1a****,** **1b** and **Figs. 2a****,** **2b** is that in **Figs. 2a****,** **2b**, the resin body 140 of the stator arrangement 100 is not depicted for illustrative purposes. This should not be understood in that the stator arrangement 100 does not comprise the resin body 140.

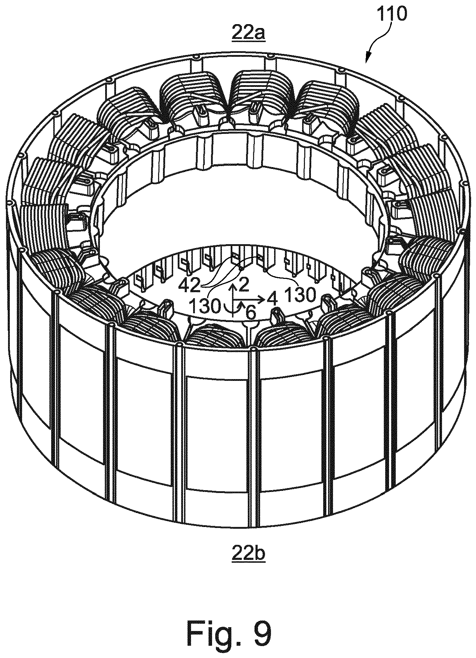

Further visible in **Figs. 1a****,** **1b****,** **2a** **and** **2b**, are the stator tooth units 10 of the stator 110 which respectively comprise a stator tooth 20, an insulation 30, and a coil 40. The stator 110 comprises a plurality of stator tooth units 10 as depicted, e.g., in **Fig. 9**.

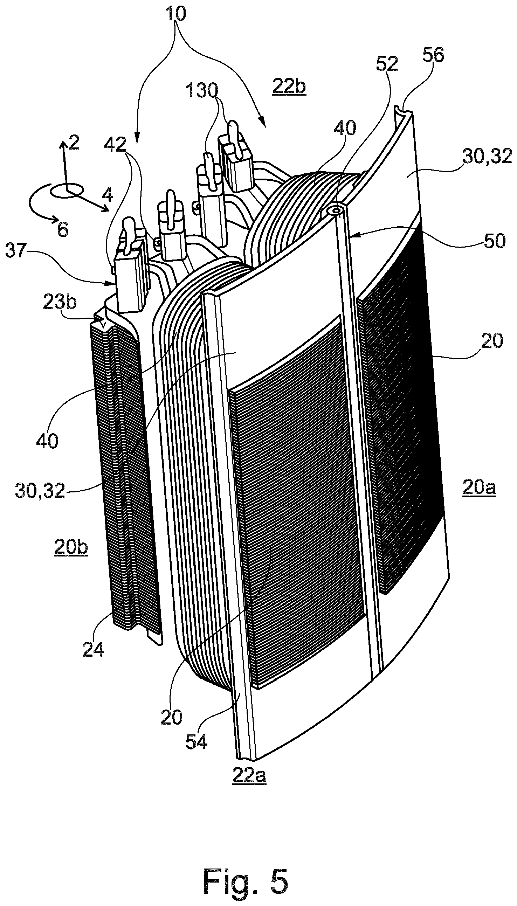

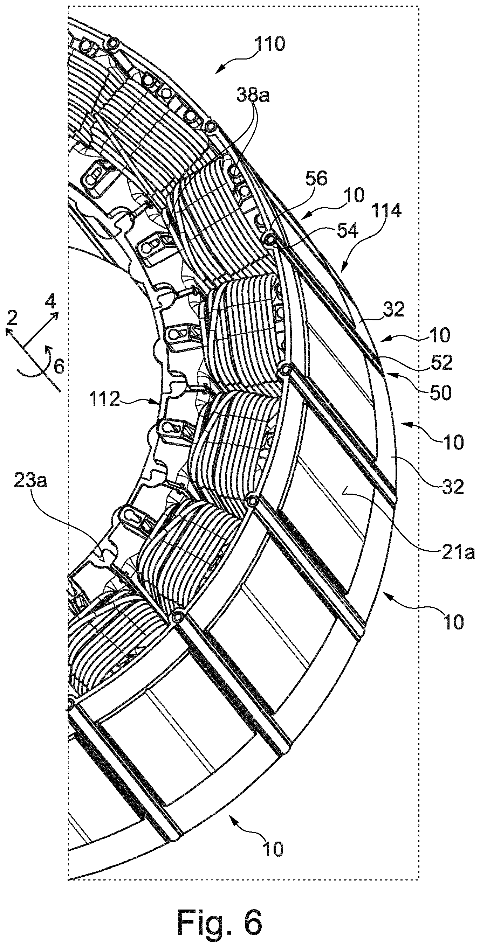

The stator tooth unit 10 according to the first aspect of the present disclosure will be described in further detail with respect to the **Figs. 5****,** **6****, and** **7** in the following. As mentioned above, the stator tooth unit 10 comprises a stator tooth 20, an insulation 30, and a coil 40. The insulation 30 is at least partially covering the stator tooth 20 and comprises and insulation wall 32 (see, **Fig. 6**). As shown in **Fig. 7**, the coil 40 is wound around the partially covered stator tooth 20.

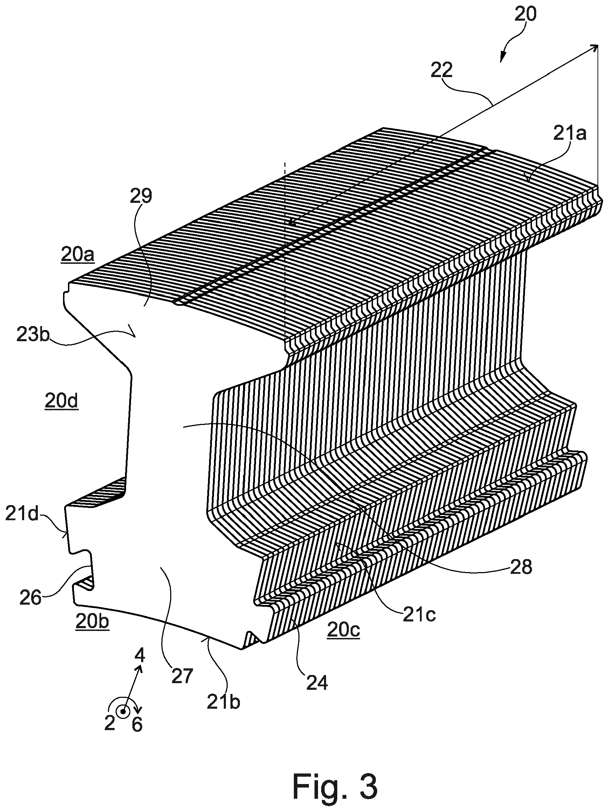

An exemplary stator tooth 20 is shown in **Fig. 3**. The stator tooth 20 defines a radially outer side 20a and a radially inner side 20b. The radially inner side 20b is opposite to the radially outer side 20a. The stator tooth 20 further defines a first circumferential side 20c and a second circumferential side 20d. The second circumferential side 20d is opposite to the first circumferential side 20c. The radial sides 20a, 20b are not strictly to be understood as surfaces or ends or portions of the stator tooth 20 but may indicate a respective radial area relative to the stator tooth 20. For instance, the radially outer side 20a may indicate a radial area that is closer to a radial outer end than to a radial inner end, and/or a radial area arranged radially outward of the radially outer end of the stator tooth 20. The radially inner side 20b may indicate a radial area that is closer to the radial inner end than to the radial outer end, and/or a radial area arranged radially inward of the radially inner end of the stator tooth 20. Analogously the circumferential sides 20c, 20d are not strictly to be understood as surfaces or ends but may indicate a respective circumferential area relative to a circumferential end and an opposite second circumferential end of the stator tooth 20. The stator tooth 20 may further define a first axial surface 23a and an opposing second axial surface 23b. The first axial surface 23a and the second axial surface 23b may define respective axial ends of the stator tooth 20 and respective axial sides 22a, 22b relative to the stator tooth 20. Between the first axial surface 23a (e.g. upper axial surface 23a) and the second axial surface 23b (e.g. lower axial surface 23b), an axial thickness 22 of the stator tooth 20 may be defined. In some embodiments, as shown in **Fig. 3**, the stator tooth 20 may comprise or may be formed of a stack of metal laminations. The stack of metal laminations may define the axial thickness 22 between the first axial surface 23a and the second axial surface 23b. As further shown in **Fig. 3**, the stator tooth 20 may be double T-shaped. The stator tooth 20 may have a central tooth web 28 between a radially outer portion 27 and a radially inner portion 29. The radially inner portion 27 may define a radially inner surface 21b. The radially inner surface 21b may point radially inwardly (i.e., toward the radially inner side 20b). The radially inner surface 21b may define the radially inner end of the stator tooth 20. The radially outer portion 29 may define a radially outer surface 21b. The radially outer surface 21a may point radially outwardly (i.e., toward the radially outer side 20a). The radially outer surface 21a may define the radially outer end of the stator tooth 20.

With further respect to **Fig. 3**, the stator tooth 20 may comprise a first engagement structure 24 a second engagement structure 26. The first engagement structure 24 is formed on the first circumferential side 20c. The second engagement structure 26 is formed on the second circumferential side 20d. As shown for instance in **Fig. 7**, the engagement structures 24, 26 are configured to engage a respectively adjacent stator tooth unit 10. For example, the first engagement structure 24 may be configured to engage a second engagement structure 26 of an adjacent stator tooth unit 10. Vice versa, the second engagement structure 26 may be configured to engage a first engagement structure 24 of an adjacent stator tooth unit 10. In other words, the first engagement structure 24 and the second engagement structure 26 may be complementary formed and configured to form-fittingly engage the stator tooth 20 of an adjacent stator tooth unit 10. In examples, the engagement structures 24, 26 may be configured as protrusion and recess with conforming contours (see, e.g., **Figs. 3** **and** **7**). For instance, the first engagement structure 24 may protrude from the stator tooth 20 on a side surface 21c of the stator tooth 20 on the first circumferential side 20c. As shown in **Fig. 3**, the first engagement structure 26 may extend axially along the stator tooth 20, particularly along the axial thickness 22 of the stator tooth 20. The second engagement structure 26 may be recessed in the stator tooth 20 on a side surface 21d of the stator tooth 20 on the second circumferential side 20d. Analogously to the first engagement structure 24, the second engagement structure 26 may extend axially along the stator tooth 20, particularly along the axial thickness 22 of the stator tooth 20. As mentioned above, the exemplary figures of the present disclosure relate to a radially outer rotor 220 (and a radially inner stator 110, i.e. the depicted stator tooth unit 10 is configured for a radially inner stator). Therefore, the engagement structures 24, 26, are located adjacent to the radially inner side 20b (and the later described insulation wall 32 is located adjacent the radially outer side 20a). More specific, the engagement structures 24, 26 may be provided in the radially inner portion 27 of the stator tooth 20. However, it should be understood that the present disclosure also encompasses stator tooth units 10 for a radially outer stator, in which the insulation wall 32 would be located adjacent to the radially inner side 20b and the engagement structures 24, 26, would be located adjacent to the radially outer side 20a (for instance, in the radially outer portion 29 of the stator tooth 20).

Although the depicted engagement structures 24, 26 are provided in the stator tooth 20 and may be configured to engage the stator tooth 20 of an adjacent stator tooth unit 10, in other embodiments, the engagement structures 24, 26 may not be provided in the stator tooth 20, but in other components of the stator tooth unit 10, for instance in the insulation 30. For instance, the insulation 30 may be configured to define the engagement structures 24, 26 as described above.

In summary, the engagement structures 24, 26 are configured to secure adjacent stator tooth units 10 circumferentially (i.e. against relative circumferential movement). At least when several stator tooth units 10 are engaged such that a ring, i.e. a stator 110 (e.g., segmented stator 110) is formed (see, e.g., **Figs. 6****,** **7****,** **9**), the engagement structures 24, 26 may also secure the stator tooth units 10 against radial forces. More specifically, the first engagement structure 24 may engage a second engagement structure 26 of a stator tooth unit 10 which is adjacent in a first circumferential direction (e.g. the circumferential direction indicated by arrow 6 in **Fig. 7**). The second engagement structure 26 may engage a first engagement structure 24 of another stator tooth unit 10 which is adjacent in a second circumferential direction which is opposite to the first circumferential direction (i.e., a circumferential direction opposite to the arrow 6 in **Fig. 7**). The form fitting engagement enables an easy assembly of several stator tooth units 10 to form a stator. Particularly, when the engagement structures 24, 26 are formed in the stator tooth 20, the engagement structures 24, 26 can be easily produced, for instance, cutting the metal laminations accordingly. Furthermore, the form fitting engagement may provide for a retention force against radial and/or circumferential forces during operation of the stator 110.

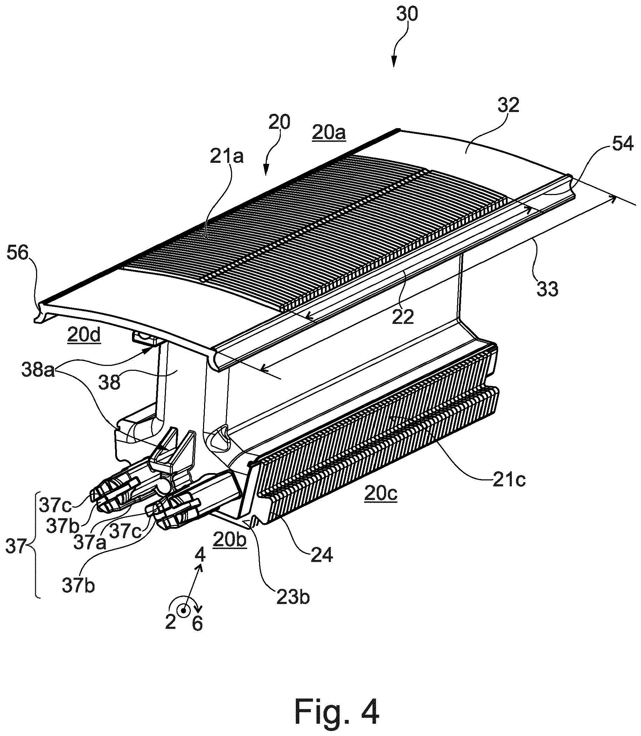

**Fig. 4** shows the stator tooth 20 partially covered with the insulation 30. As mentioned above, the insulation 30 comprises an insulation wall 32. As shown, e.g. in **Figs. 1b****,** **2b** **and** **4**, the insulation 30 may further comprise a coil insulation portion 38. The coil insulation portion may be arranged between the coil 40 and the stator tooth 20. Specifically, the coil insulation portion 38 may be arranged at least on the central tooth web 28. In some embodiments, the coil insulation portion 38 may comprise radially inner and/or radially outer coil stops 38a (see, e.g., **Figs. 4** **and** **6**). The coil stops 38a are configured to keep the coil 40 in the central tooth web region 28. The radially inner and/or radially outer coil stops 38a may be provided on the first axial side 22a and/or on the second axial side 22b. As shown in **Fig. 6**, the coil stops 38a may be inclined towards the central tooth web region 28. The coil insulation 38 portion may be configured for electrically insulating the coil 40 with respect to the stator tooth 20. In some embodiments, the insulation 30 may further comprise a supporting portion 37 (see, e.g., **Figs. 1b****,** **2b****,** **3****, and** **4**). The supporting portion 37 may be configured to support at least one of wire ends 42 of the coil 40, a lead frame 150 for the stator 110, and/or electrical connectors 130 for connecting the wire ends 42 of the coil 40 to the lead frame 150. In that respect Figs. **Figs. 1b****,** **2b****, and** **3****,** show that the supporting portion 37 may comprise a wire end supporting portion 37a, a connector supporting portion 37b and/or a lead frame supporting portion 37c. As seen particularly, in Figs. **Figs. 1b****,** **2b****, and** **4**, the wire ends 42 may be inserted into the wire end supporting portion 37a. Connectors 130 may be inserted into the connector supporting portion 37b whereby the electrical connectors 130 may establish an electrical connection to the wire ends 42, e.g. by cold shut process. The lead frame 150 may be pressed on the connectors 130 and may be supported by the lead frame supporting portion 37c (see, particularly **Figs. 1b** **and** **2b**). The insulation 30 may be an overmolded plastic part. In examples, a material of the insulation may comprise polymer or fibre reinforced polymer, e.g., a glass fibre reinforced polymer. For instance, the material of the insulation may comprise polyamide or fibre reinforced polyamide, e.g., a glass fibre reinforced polyamide. In some examples, the material of the insulation may comprise PA66. In some embodiments the material may comprise 20% to 40%, for instance 30% glass fibre. The percentage may refer to weight percent of the material of the insulation 30.

Again with reference to **Fig. 4**, the insulation wall 32 extends away from the stator tooth 20 on the first circumferential side 20c. The insulation wall 32 may also extend away from the stator tooth 20 on the second circumferential side 20d. In other words, the insulation wall 32 comprises a portion which is arranged on the stator tooth 20 on the first circumferential side 20c and another portion which is arranged on the stator tooth 20 on the second circumferential side 20d. More specifically, the insulation wall 32 may define two side edges. A first side edge being arranged on the first circumferential side 20c. A second side edge being arranged on the second circumferential side 20d. The side edges may define respective ends of the insulation wall 32 in the circumferential direction 6, and may therefore also be referred to as circumferential edges. In embodiments, as shown e.g. in **Figs. 4****,** **5** **and** **6**, the side edges may extend substantially along the axial direction 2. In other embodiments the circumferential edges may be inclined with respect to the axial direction 2, for instance by up to 30°. Specifically, the circumferential edges of the insulation wall 32 may be parallel to each other.

In addition to the circumferential extension of the insulation wall 32, the insulation wall 32 extends axially above and axially below the stator tooth 20 (see, e.g. **Figs. 4** **and** **5**). As shown in the figures, the insulation wall 32 may extend away from the stator tooth 20 on a first axial side 22a (i.e. axially above the stator tooth 20) and on a second axial side 22b (i.e. axially below the stator tooth 20). More specifically, the insulation wall 32 may extend away from the first axial surface 23a (i.e. axially above the stator tooth 20) and the second axial surface 23b (i.e. axially below the stator tooth 20). It is noted that the terms "axially above" and "axially below" refer to positions/directions during potting or assembly of the stator arrangement 100. In that regard **Fig. 9** depicts the stator 110 in an orientation in which it is assembled/potted in the stator housing 120. In **Fig. 9** the direction of gravity would be oriented from the top of the sheet to the bottom of the sheet. In **Figs. 1a** **and** **2a**, the direction of gravity during assembly/potting would be from the left side of the sheet to the right side of the sheet. With respect to Fig. 5, the direction of gravity would be analogously in a direction of the arrow of the axial direction 2. Therefore, the first axial side 22a / first axial surface 23a may also be referred to as upper axial side 22a / upper axial surface 23a. Analogously, the second axial side 22b / second axial surface 23b may also be referred to as lower axial side 22b / lower axial surface 23b. In some examples, the insulation wall 32 may extend at least above and below the axial surfaces 23a, 23b to extend axially over coil turns of the coil 40 (see, e.g., **Figs. 1b****,** **2b****, and** **5**). By extending axially above the stator tooth 20, the insulation wall 32 may define a first edge being arranged on the first axial side 22a. By extending axially below the stator tooth 20, the insulation wall 32 may define a second edge being arranged on the second axial side 22b. These edges may define respective ends of the insulation wall 32 in the axial direction 2 and may therefore be referred to as axial edges. In embodiments, the first axial edge and the second axial edge may substantially extend in a circumferential direction 6 (see, **Figs. 4 to 6**). In other embodiments, the axial edges may deviate from a circumferential shape, and may be formed, e.g. tangentially.

In other embodiments, the insulation wall 32 may however axially extend only above or below stator tooth 20. In further embodiments, the insulation wall 32 may extend axially along the stator tooth 20 at least along an axial thickness 22 of the stator tooth 20. By extending at least along an axial thickness 22 of the stator tooth 20, a sealing and potting boundary for at least an axial height of the stator tooth 20 can be provided.

As mentioned before, the exemplary figures of the present disclosure relate to a radially outer rotor 220 (and a radially inner stator 110, i.e. the depicted stator tooth unit 10 is configured for a radially inner stator). Therefore as shown e.g. in **Fig. 4****,** the insulation wall 32 is located adjacent to the radially outer side 20a, particularly at about the radially outer end of the stator tooth 20 (and the above described engagement structures 24, 26 are located adjacent to the radially inner side 20b). Specifically, a radially outer surface 21a of the stator tooth 20 is not covered by the insulation wall 32. In embodiments the insulation wall may be radially recessed, particularly radially inwardly recessed, with respect to the radially outer surface 21a. In other embodiments, the insulation wall 32 may be flush with the radially outer surface 21a of the stator tooth 20. It should be understood that the present disclosure also encompasses stator tooth units 10 for a radially outer stator, in which the insulation wall 32 would be located adjacent to the radially inner side 20b and the engagement structures 24, 26, would be located adjacent to the radially outer side 20a.

With reference to **Figs. 4****,** **5****,** **6****,** **7****,** **8a, 8b, and 8c**, the insulation wall 32 further comprises a sealing structure 54, 56 on at least one circumferential side 20c, 20d. More specifically, the sealing structure 54, 56 may be arranged on the first side edge and/or the second side edge of the insulation wall 32. The sealing structure 54, 56 is configured to form a sealing 50 with the insulation wall 32 of an adjacent stator tooth unit 10 (see, e.g., **Fig. 5**). In some examples, the sealing structure 54, 56 may comprise a first sealing structure 54 which is arranged on the first circumferential side 20c of the insulation wall 32 and a second sealing structure 56 which is arranged on the second circumferential side 20d of the insulation wall 32. The sealing structures 54, 56 may be formed in the circumferential edges or may represent the circumferential edges. The first sealing structure 54 may be configured to form the sealing 50 with the second sealing structure 56 of an adjacent stator tooth unit 10. By the provision of an insulation wall 32 on the stator tooth 10, a complex and large molding tooling for potting the stator 110 in the stator housing 120 can be dispensed with. This is possible due to the circumferential extension of the insulation walls 32 and their function to form a sealing 50 with an adjacent stator tooth unit 10. In other words, the insulation wall 32 of the stator tooth unit 10 provides a portion of a boundary (e.g. outer circumference 114) for filling liquid resin into the stator 110 during potting of the stator 110 in the stator housing 120. Therefore, less tooling equipment for potting is required. Particularly, no preparation and cleaning of molding tools and no demolding is required. In summary, the provided stator tooth unit 10 enables a more efficient production of a stator arrangement 100 and electrical machine 200.

As shown in **Figs. 4** **and** **5**, the sealing structure 54, 56 may extend at least along an axial thickness 33 of the insulation wall 32. Particularly, the sealing structure 54, 56 may extend from the first axial edge to the second axial edge of the insulation wall 32. By extending at least along an axial thickness 33 of the insulation wall 32, a sealing and potting boundary for at least an axial height 22 of the stator tooth 20, more specifically at least an axial thickness 33 of the insulation wall 32 can be provided.

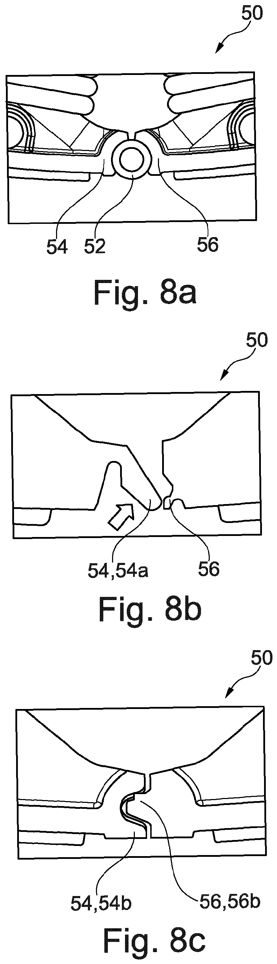

**Figs. 8a to 8c**, show three exemplary (and non-limiting) embodiments of how the sealing structure 54, 56 may be configured.

According to **Fig. 8a** (see, also Figs. 5 to 7), the first sealing structure 54 may be configured to conjointly hold a separate sealing element 52 with the second sealing structure 56 of an adjacent stator tooth unit 10 such that the first sealing structure 54 of the stator tooth unit 10, the separate sealing element 52 and the second sealing structure 56 of an adjacent stator tooth unit 10 conjointly form the sealing 50. In embodiments, at least one of the first and second sealing structures 54, 56 may comprise a sealing groove for receiving the separate sealing element 52.

According to **Fig. 8b****,** the first sealing structure 54 may comprise a flexible sealing lip 54a which is configured to be pressed against the second sealing structure 56 of an adjacent stator tooth unit 10. In some embodiments, the second sealing structure 56 may, for instance, provide a support surface against which the flexible sealing lip 54a may be pressed. In alternative embodiments, the flexible sealing lip 54a may be provided at the second sealing structure 56 and the first sealing structure 54 may provide the support structure. In some embodiments both sealing structures 54, 56 may comprise a flexible sealing lip 54a which may be pressed against a sealing lip 54a of an adjacent stator tooth unit 10.

According to **Fig. 8c**, the first sealing structure 54 may comprise a sealing groove 54b and the second sealing structure 56 comprises a sealing protrusion 56b. The sealing groove 54b and the sealing protrusion 56b may be configured to sealingly engage with the sealing protrusion 56b and sealing groove 54b of an adjacent stator tooth unit 10, respectively.

The stator 110 for an electrical machine 200 according to the second aspect of the present disclosure is depicted, for instance, in **Figs. 6****,** **7****,** **9** **and** **10**. The stator 110 comprises a plurality of stator tooth units 10 according to the first aspect. The stator tooth units 10 are circumferentially arranged around the axis 111 of the stator 110. The insulation walls 32 of adjacent stator tooth units 10 form a respective sealing 50. Thereby, the plurality of stator tooth units 10 conjointly form a closed circumference. As the stator 110 comprises a plurality of stator tooth units 10, the stator 110 may also be referred to as a segmented stator 110. The insulation walls 32 of adjacent stator tooth units 10 may conjointly form a radially outer circumferential boundary 114. The engagement structures 24, 26 of adjacent stator tooth units 10 may be engaged such that the stator teeth 20 of adj acent stator tooth units 10 conj ointly form a radially inner circumferential boundary 112. In other embodiments relating to radially outer stators, the insulation walls 32 may be arranged at radially inner portions of the stator teeth 20 to thereby form the radially inner circumferential boundary 112, and the stator teeth 20 may form the radially outer circumferential boundary 114 via their engaged engagement structures 24, 26.

As particularly shown in **Figs. 1a****,** **2a** **and** **10**, the stator 110 may further comprise the above mentioned lead frame 150. The lead frame 150 may be arranged at a lower axial side 22b of the stator tooth units 10. The lead frame 150 may be electrically connected to the coils 40. For instance, the lead frame 150 may be electrically connected to wire ends 42 of the coils 40 via connectors 130 as mentioned above. In other words, the stator may comprise a plurality of connectors 130 which connect a respective wire end 42 of the coils 40 to the lead frame 150. In embodiments, the insulation walls 32 may axially extend at least below the lead frame 150. In other words, the second axial edges of the insulation walls 32 may extend axially beyond the lead frame 150. Thereby, an insulation of the coils 40 and the lead frame 150 can be provided with respect to a stator housing 120 and the lead frame 150 can be protected.

The stator arrangement 100 according to the third aspect of the present disclosure is shown in **Figs. 1a****,** **1b****,** **2a****,** **2b**. The stator arrangement 100 comprises the stator 110 according to the second aspect, the resin body 140, and the stator housing 120. The stator housing 120 may define an annular receiving portion with a first circumferential wall 122, an annular end wall 124, and a second circumferential wall 126. The second circumferential wall 126 is radially opposite to the first circumferential wall 122. The stator 110 is arranged at least partially in the annular receiving portion. In embodiments, the resin body 140 may comprise epoxy resin. In embodiments, the resin body 140 may be configured to securely hold the stator 110 in the stator housing 120. As shown in **Figs. 1a****, and** **1b**, the resin body 140 is arranged between the insulation walls 32 and the first circumferential wall 122. Furthermore, the resin body 140 is arranged at least at the bottom of the annular receiving portion, i.e. between the stator 110 and the annular end wall 124. As shown in **Figs. 1a****,** **1b****,** **2a****,** **2b**, the stator teeth 20 may be supported on the first circumferential wall 122. More specifically, the stator teeth 20 may lie against the first circumferential wall 122 with their radially inner surface 21b. Furthermore, the stator teeth 20 may be axially supported on a step of the first circumferential wall 122.

As specifically shown in **Figs. 1b****,** **2b**, the insulation walls 32 may be arranged adjacent to the second circumferential wall 126. The insulation walls 32 may axially extend at least over an overlap portion 126a of the second circumferential wall 126. The overlap portion 126a may describe a portion of the second circumferential wall 126 over which the insulation walls 32 may axially extend, and may also be referred to as axial overlap portion. The overlap portion 126a is particularly advantageous for potting the stator 110 in the stator housing 120 as it may reduce leakage of liquid resin and may simplify a pre-potting step. In some embodiments, the overlap portion 126a may be 0.5mm to 10mm. Specifically, the overlap portion 126a may be 1mm to 5mm. In some embodiments, the overlap portion 126a may be at least 1mm.

As shown in **Fig. 1b**, the resin body 140 radially fills space between the insulation walls 32 and the second circumferential wall 126 over the overlap portion 126a. In other embodiments, the resin body 140 may only fill at least an axial sub-portion of the overlap portion 126a. In other words, the surface of the resin body 140 in the area between the insulation walls 32 and the second circumferential wall 126 may be arranged axially further towards the annular end wall 124.

In specific embodiments, the second circumferential wall 126 may be formed such that at least at an axial position of the overlap portion 126a a radial distance 126b between the insulation walls 32 and the second circumferential wall 126 is at most 2mm, specifically at most 1mm und more specifically at most 0,5mm. In some examples, the radial distance 126b may be at most about 0mm to about 2mm, specifically at most about 0,2mm to about 1mm. In other words, at least in one axial plane defined be the radial direction 4 and the circumferential direction 6, the radial distance 126b is at most 2mm, specifically at most 1mm und more specifically at most 0,5mm. This reduced radial distance 126b at the axial position or axial plane may reduce leakage of liquid resin or partially hardened resin and thus act as sealing or at least barrier against leakage. As shown in **Figs. 1b** **and** **2b****,** the second circumferential wall 126 may for example comprise a radial step towards the insulation walls 32 to reduced the radial distance 126b. In other embodiments, the second circumferential wall 126 may be radially tapering towards or away from the annual end wall 124. That means the radial distance 126b may decrease towards or away from the annular end wall 126b to provide at least at one axial position a reduced radial distance 126b. In further other embodiments, the second circumferential wall 126 may be in contact and/or conforming to the contour of the insulation walls 32.

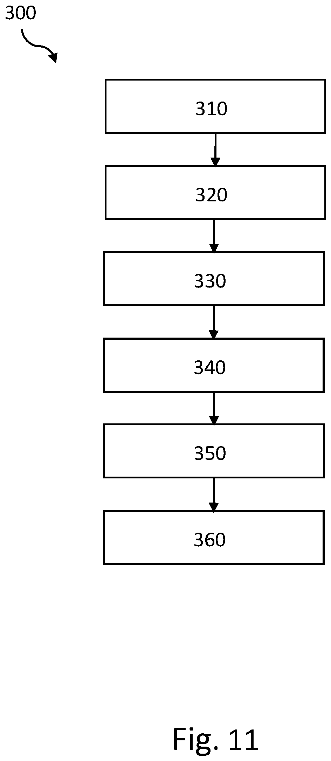

With reference to **Fig. 11**, the method 300 for manufacturing a stator arrangement 100 according to the fifth aspect of the present disclosure is explained. The method 300 may comprise providing 310 a plurality of stator tooth units 10 each having a stator tooth 20, an insulation 30 with an insulation wall 32, and a coil 40 wound around the stator tooth 20. The method 300 may further comprise arranging 320 the stator tooth units 10 circumferentially such that the insulation walls 32 conjointly form a closed circumference 112, 114 to thereby form a stator 110. The method 300 may further comprise providing 340 a stator housing 120 which defines an annular receiving portion with a first circumferential wall 122, an annular end wall 124, and a second circumferential wall 126 radially opposite to the first circumferential wall 122. The method 300 may further comprise inserting 350 the stator 110 in the annular receiving portion such that an axial portion of the insulation walls 32 is arranged between the first and second circumferential walls 122, 126. The method 300 may further comprise potting 360 the stator 110 in the stator housing 120 by filling liquid resin between the insulation walls 32 and the first circumferential wall 122 such that after hardening the liquid resin a resin body 140 is formed between the insulation walls 32and the first circumferential wall 122.

Particular, stator tooth units 10 according to the first aspect may be provided according to the method 300. Specifically, the method 300 may relate to manufacturing the stator arrangement 100 according to the third aspect.

In some embodiments of the method 300, before potting 360 a removable sealing may be arranged to seal a gap between the insulation walls 32 and the second circumferential wall 126.

Alternatively to the removable sealing, potting 360 may comprise pre-potting a first amount of liquid resin to at least partially fill an overlap portion 126a between the insulation walls 32 and the second circumferential wall 126. The first amount of liquid resin may at least be partially hardened to form a first resin body portion for sealing between the insulation walls 32 and the second circumferential wall 126. After pre-potting, a second amount of liquid resin may be filled between the insulation walls 32 and the first circumferential wall 122 to form a second resin body portion. The first resin body portion and the second resin body portion may together form the resin body 140. By this two-step potting approach, a separate potting tool for sealing between the insulation walls 32 and the second circumferential wall 126 can be omitted. Thereby, leakage of liquid resin through gaps between the second circumferential wall 126 and the insulation walls 32 can be prevented. Such leakage could detriment the function of the electrical machine 200 in which in the stator arrangement 100 may be used. For instance, excess resin may be pushed through the gap into the machine housing 210. For instance, during operation, the rotor 220 may come into contact with the excess resin and may eventually be damaged. Furthermore, open potting, i.e. without enclosing potting tools is possible. This may improve the efficiency of the manufacturing process. In embodiments, the first amount may be filled through the gap between the insulation walls 32 and the first circumferential wall 122 and/or between the insulation walls 32 and the first circumferential wall 122.

In embodiments, pre-potting may comprise pre-heating the stator arrangement 100 before filling the second amount of liquid resin to at least partially harden the first amount of liquid resin. Pre-heating may for instance be conducted in an oven. The pre-heating may be controlled such that a sealing function is established. Only pre-hardening the first amount of liquid resin may improve the interface between the first and second resin body portions (e.g. the bonding may be improved). However, in other embodiments, the first amount of liquid resin may also be fully hardened.

In embodiments of the method, potting 360 may be performed with an upper axial surface 23a of the stator teeth 20 pointing in a direction opposite to gravity. In some embodiments, potting 360 may be performed as open potting under vacuum.

In embodiments, the method 300 may further comprise connecting 330 a lead frame 150 via connectors 130 to the stator 110 at a lower axial side 22b of the stator 110. Connecting 330 may particularly be performed before inserting 350 the stator 110. Specifically, the lead frame 150 may be pressed on the connectors 130 which are inserted into stator, specifically into the connector supporting portions 37b. In embodiments, the lead frame 150 may be attached to the stator 110 in the direction of gravity while the stator 110 is positioned with the lower axial surface 23b pointing in a direction opposite to gravity. In specific embodiments, the stator 110 may be inserted with the lower axial side 22b (i.e. the side of the lead frame 150) first into the stator housing 120.

Although the present invention has been described above and is defined in the attached claims, it should be understood that the invention may alternatively be defined in accordance with the following embodiments:
1. A stator tooth unit (10) for a stator (110) having an axis (111) and a plurality of stator tooth units (10) which are circumferentially arranged around the axis (111), the stator tooth unit (10) comprising:
   - a stator tooth (20) defining a radially outer side (20a) and a radially inner side (20b) opposite to the radially outer side (20a), and defining a first circumferential side (20c) and a second circumferential side (20d) opposite to the first circumferential side (20c),
   - an insulation (30) at least partially covering the stator tooth (20), and
   - a coil (40) wound around the partially covered stator tooth (20),
   wherein the insulation (30) comprises an insulation wall (32) extending away from the stator tooth (20) on the first and second circumferential sides (20c, 20d), and
   wherein the insulation wall (32) comprises a sealing structure (54, 56) on at least one circumferential side (20c, 20d), the sealing structure (54, 56) being configured to form a sealing (50) with the insulation wall (32) of an adjacent stator tooth unit (10).
2. The stator tooth unit (10) of embodiment 1, wherein the insulation wall (32) is located adjacent to one of the radially outer side (20a) or the radially inner side (20b).
3. The stator tooth unit (10) of any one of the preceding embodiments, wherein the insulation wall (32) extends axially along the stator tooth (20) at least along an axial thickness (22) of the stator tooth (20).
4. The stator tooth unit (10) of any one of the preceding embodiments, wherein the insulation wall (32) extends axially above and/or axially below the stator tooth (20).
5. The stator tooth unit (10) of any one of the preceding embodiments, wherein the sealing structure (54, 56) extends along an axial thickness (33) of the insulation wall (32).
6. The stator tooth unit (10) of any one of the preceding embodiments, wherein the sealing structure (54, 56) comprises a first sealing structure (54) which is arranged on the first circumferential side (20c) of the insulation wall (32) and a second sealing structure (56) which is arranged on the second circumferential side (20d) of the insulation wall (32).
7. The stator tooth unit (10) of embodiment 6, wherein the first sealing structure (54) is configured to form the sealing (50) with the second sealing structure (56) of an adjacent stator tooth unit (10).
8. The stator tooth unit (10) of any one of embodiments 6 or 7, wherein the first sealing structure (54) is configured to conjointly hold a separate sealing element (52) with the second sealing structure (56) of an adjacent stator tooth unit (10) such that the first sealing structure (54) of the stator tooth unit (10), the separate sealing element (52) and the second sealing structure (56) of an adjacent stator tooth unit (10) conjointly form the sealing (50).
9. The stator tooth unit (10) of any one of embodiments 6 or 7, wherein the first sealing structure (54) comprises a flexible sealing lip (54a) which is configured to be pressed against the second sealing structure (56) of an adjacent stator tooth (10).
10. The stator tooth unit (10) of any one of embodiments 6 or 7, wherein the first sealing structure (54) comprises a sealing groove (54b) and wherein the second sealing structure (56) comprises a sealing protrusion (56b).
11. The stator tooth unit (10) of any one of the preceding embodiments, further comprising a first engagement structure (24) being formed on the first circumferential side (20c) and a second engagement structure (26) being formed on the second circumferential side (20d), wherein the engagement structures (24, 26) are configured to engage a respectively adjacent stator tooth unit (10).
12. The stator tooth unit (10) of embodiment 11 if at least dependent on embodiment 2, wherein the engagement structures (24, 26) are located adjacent to the other of the radially outer side (20a) or the radially inner side (20b).
13. The stator tooth unit (10) of any one of embodiments 11 or 12, wherein the engagement structures (24, 26) are provided in the stator tooth (20) and are configured to engage the stator tooth (20) of an adjacent stator tooth unit (10).
14. The stator tooth unit (10) of any one of embodiments 11 to 13, wherein the first engagement structure (24) and the second engagement structure (26) are complementary formed and configured to form-fittingly engage the stator tooth (20) of an adj acent stator tooth unit (10).
15. The stator tooth unit (10) of any one of embodiments 11 to 14, wherein the first engagement structure (24) protrudes from the stator tooth (20) on a side surface (21c) of the stator tooth (20) on the first circumferential side (20c).
16. The stator tooth unit (10) of any one of embodiments 11 to 15, wherein the second engagement structure (26) is recessed in the stator tooth (20) on a side surface (21d) of the stator tooth (20) on the second circumferential side (20d).
17. The stator tooth unit (10) of any one of the preceding embodiments, wherein the stator tooth (20) comprises a stack of metal laminations which define an axial thickness (22) between a first axial surface (23a) and an opposing second axial surface (23b) of the stator tooth (20).
18. The stator tooth unit (10) of any one of the preceding embodiments, wherein the stator tooth (20) is double T-shaped having a central tooth web (28) between a radially outer portion (27) and a radially inner portion (29).
19. The stator tooth unit (10) of any one of the preceding embodiments, wherein the insulation (30) is an overmolded plastic part.
20. The stator tooth unit (10) of any one of the preceding embodiments, wherein the insulation (30) further comprises a coil insulation portion (38) which is arranged between the coil (40) and the stator tooth (20), specifically the coil insulation portion (38) is arranged on the central tooth web (28).
21. The stator tooth unit (10) of any one of the preceding embodiments, wherein the insulation (30) further comprises a supporting portion (37) which is configured to support at least one of wire ends (42) of the coil (40), a lead frame (150) for the stator (110), and/or electrical connectors for connecting the wire ends (42) of the coil (40) to the lead frame (150).
22. A stator (110) for an electrical machine (200) comprising:
   a plurality of stator tooth units (10) according to any one of the preceding embodiments,
   wherein the stator tooth units (10) are circumferentially arranged around the axis (111) of the stator (110), and
   wherein the insulation walls (32) of adjacent stator tooth units (10) by forming a respective sealing (50) conjointly form a closed circumference.
23. The stator (110) of embodiment 22, wherein the insulation walls (32) of adjacent stator tooth units (10) conjointly form a radially outer circumferential boundary (114).
24. The stator (110) of any one of embodiments 22 or 23 if at least dependent on embodiment 11, wherein the engagement structures (24, 26) of adjacent stator tooth units (10) are engaged such that the stator teeth (20) of adjacent stator tooth units (10) conjointly form a radially inner circumferential boundary (112).
25. The stator (110) of any one of embodiments 22 to 24, further comprising a lead frame (150) which is arranged at a lower axial side (22b) of the stator tooth units (10), and which is electrically connected to the coils (40).
26. The stator (110) of embodiment 25, wherein the lead frame (150) is electrically connected to wire ends (42) of the coils (40) via connectors (130).
27. A stator arrangement (100) for an electrical machine (200), wherein the stator arrangement (100) comprises:
   the stator (110) according to any one of embodiments 22 to 26,
   a resin body (140), and
   a stator housing (120) defining an annular receiving portion with a first circumferential wall (122), an annular end wall (124), and a second circumferential wall (126) radially opposite to the first circumferential wall (122),
   wherein the stator (110) is arranged at least partially in the annular receiving portion.
28. The stator arrangement (100) of embodiment 27, wherein the stator teeth (20) are supported on the first circumferential wall (122).
29. The stator arrangement (100) of any one of embodiments 27 or 28, wherein the insulation walls (32) are arranged adjacent to the second circumferential wall (126), and wherein the insulation walls (32) axially extend at least over an overlap portion (126a) of the second circumferential wall (126).
30. The stator arrangement (100) of embodiment 29, wherein the overlap portion (126a) is 0.5mm to 10mm, specifically 1mm to 5mm.
31. The stator arrangement (100) of any one of embodiments 29 or 30, wherein the resin body (140) radially fills space between the insulation walls (32) and the second circumferential wall (126) at least over an axial sub-portion of the overlap portion (126a).
32. The stator arrangement (100) of any one of embodiments 29 to 31, wherein the second circumferential wall (126) is formed such that at least at an axial position of the overlap portion (126a) a radial distance (126b) between the insulation walls (32) and the second circumferential wall (126) is at most 2mm, specifically at most 1mm und more specifically at most 0,5mm.
33. An electrical machine (200), particularly electric motor (200), comprising:
   a machine housing (210),
   a shaft (230) rotatably supported in the machine housing (210),
   a rotor (220) fixedly arranged on the shaft (230) in the machine housing (210),
   the stator arrangement (100) of any one of embodiments 27 to 32, wherein the stator (110) is arranged adjacently to the rotor (220) in the machine housing (210).
34. The electrical machine (200) of embodiment 33, wherein the stator (110) is arranged radially adjacent to the rotor (220).
35. The electrical machine (200) of any one of embodiments 33 or 34, wherein the rotor (220) is configured as a radially outer rotor and comprises a plurality of circumferentially distributed rotor poles (222) which are arranged on a rotor body (224).
36. The electrical machine (200) of any one of embodiments 33 to 35, wherein the machine housing (210) comprises a rotor housing (212) and the stator housing (120), wherein the rotor housing (212) and the stator housing (120) are connected force-fittingly.
37. A method (300) for manufacturing a stator arrangement (100) comprising:
   providing (310) a plurality of stator tooth units (10) each having a stator tooth (20), an insulation (30) with an insulation wall (32), and a coil (40) wound around the stator tooth (20),
   arranging (320) the stator tooth units (10) circumferentially such that the insulation walls (32) conjointly form a closed circumference (112, 114) to thereby form a stator (110),
   providing (340) a stator housing (120) which defines an annular receiving portion with a first circumferential wall (122), an annular end wall (124), and a second circumferential wall (126) radially opposite to the first circumferential wall (122),
   inserting (350) the stator (110) in the annular receiving portion such that an axial portion of the insulation walls (32) is arranged between the first and second circumferential walls (122, 126), and
   potting (360) the stator (110) in the stator housing (120) by filling liquid resin between the insulation walls (32) and the first circumferential wall (122) such that after hardening the liquid resin a resin body (140) is formed between the insulation walls (32) and the first circumferential wall (122).
38. The method of embodiment 37, wherein stator tooth units (10) according to any one of embodiments 1 to 21 are provided.
39. The method of any one of embodiments 37 or 38, wherein before potting (360) a removable sealing is arranged to seal a gap between the insulation walls (32) and the second circumferential wall (126).
40. The method of any one of embodiments 37 or 38, wherein potting (360) comprises:
   pre-potting a first amount of liquid resin to at least partially fill an overlap portion (126a) between the insulation walls (32) and the second circumferential wall (126), wherein
   the first amount of liquid resin is at least partially hardened to form a first resin body portion for sealing between the insulation walls (32) and the second circumferential wall (126), and after pre-potting,
   filling a second amount of liquid resin between the insulation walls (32) and the first circumferential wall (122) to form a second resin body portion, wherein the first resin body portion and the second resin body portion together form the resin body (140).
41. The method of embodiment 40, wherein pre-potting comprises pre-heating the stator arrangement before filling the second amount of liquid resin to at least partially harden the first amount of liquid resin.
42. The method of any one of embodiments 37 to 41, wherein potting (360) is performed with an upper axial surface (23b) of the stator teeth (20) pointing in a direction opposite to gravity.
43. The method of any one of embodiments 37 to 42, further comprising connecting (330) a lead frame (150) via connectors (130) to the stator (110) at a lower axial side (22b) of the stator (110).

### Reference sign list

- 2: Axial direction
- 4: Radial direction
- 6: Circumferential direction
- 10: Stator tooth unit
- 20: Stator tooth
- 20a, 21a: Radially outer side/surface
- 20b, 21b: Radially inner side/surface
- 20c, 21c: First circumferential side/surface
- 20d, 21d: Second circumferential side/surface
- 22: Axial thickness of stator tooth
- 22a, 23a: Upper axial side/surface
- 22b, 23b: Lower axial side/surface
- 24: First engagement structure
- 26: Second engagement structure
- 27: Radially inner portion
- 28: Central tooth web
- 29: Radially outer portion
- 30: Insulation
- 32: Insulation wall
- 33: Axial thickness of insulation wall
- 37: Supporting portion
- 37a: Wire end supporting portion
- 37b: Connector supporting portion
- 37c: Lead frame supporting portion
- 38: coil insulation portion
- 38a: coil stops
- 40: Coil
- 42: Wire ends
- 50: Sealing
- 52: Sealing element
- 54: First sealing structure
- 54a: Flexible sealing lip
- 54b: Sealing recess
- 56: Second sealing structure
- 56b: Sealing protrusion
- 100: Stator arrangement
- 110: Stator
- 111: Stator axis
- 112: Inner circumferential boundary
- 114: Outer circumferential boundary
- 120: Stator housing
- 122: First circumferential wall
- 124: Annular end wall
- 126: Second circumferential wall
- 126a: Overlap portion
- 126b: Radial distance
- 130: Connector
- 140: Resin body
- 150: Lead frame
- 160: Connector arrangement
- 200: Electrical machine
- 210: Machine housing
- 212: Rotor housing
- 220: Rotor
- 222: Rotor magnet
- 224: Rotor body
- 230: Shaft

## Claims

1. A stator tooth unit (10) for a stator (110) having an axis (111) and a plurality of stator tooth units (10) which are circumferentially arranged around the axis (111), the stator tooth unit (10) comprising:
- a stator tooth (20) defining a radially outer side (20a) and a radially inner side (20b) opposite to the radially outer side (20a), and defining a first circumferential side (20c) and a second circumferential side (20d) opposite to the first circumferential side (20c),
- an insulation (30) at least partially covering the stator tooth (20), and
- a coil (40) wound around the partially covered stator tooth (20),
wherein the insulation (30) comprises an insulation wall (32) extending away from the stator tooth (20) on the first and second circumferential sides (20c, 20d), and
wherein the insulation wall (32) comprises a sealing structure (54, 56) on at least one circumferential side (20c, 20d), the sealing structure (54, 56) being configured to form a sealing (50) with the insulation wall (32) of an adjacent stator tooth unit (10).

2. The stator tooth unit (10) of claim 1, wherein the insulation wall (32) extends axially along the stator tooth (20) at least along an axial thickness (22) of the stator tooth (20).

3. The stator tooth unit (10) of any one of the preceding claims, wherein the insulation wall (32) extends axially above and/or axially below the stator tooth (20).

4. The stator tooth unit (10) of any one of the preceding claims, wherein the sealing structure (54, 56) comprises a first sealing structure (54) which is arranged on the first circumferential side (20c) of the insulation wall (32) and a second sealing structure (56) which is arranged on the second circumferential side (20d) of the insulation wall (32), particularly, wherein the first sealing structure (54) is configured to form the sealing (50) with the second sealing structure (56) of an adjacent stator tooth unit (10).

5. The stator tooth unit (10) of any one of the preceding claims, further comprising a first engagement structure (24) being formed on the first circumferential side (20c) and a second engagement structure (26) being formed on the second circumferential side (20d), wherein the engagement structures (24, 26) are configured to engage a respectively adjacent stator tooth unit (10).

6. The stator tooth unit (10) of claim 5, wherein the insulation wall (32) is located adjacent to one of the radially outer side (20a) or the radially inner side (20b), and wherein the engagement structures (24, 26) are located adjacent to the other of the radially outer side (20a) or the radially inner side (20b).

7. The stator tooth unit (10) of any one of the preceding claims, wherein the insulation (30) is an overmolded plastic part, and optionally,
wherein the insulation (30) further comprises a supporting portion (37) which is configured to support at least one of wire ends (42) of the coil (40), a lead frame (150) for the stator (110), and/or electrical connectors for connecting the wire ends (42) of the coil (40) to the lead frame (150).

8. A stator (110) for an electrical machine (200) comprising:
a plurality of stator tooth units (10) according to any one of the preceding claims,
wherein the stator tooth units (10) are circumferentially arranged around the axis (111) of the stator (110), and
wherein the insulation walls (32) of adjacent stator tooth units (10) by forming a respective sealing (50) conjointly form a closed circumference.

9. The stator (110) of claim 8, wherein the insulation walls (32) of adjacent stator tooth units (10) conjointly form a radially outer circumferential boundary (114).

10. A stator arrangement (100) for an electrical machine (200), wherein the stator arrangement (100) comprises:
the stator (110) according to any one of claims 8 or 9,
a resin body (140), and
a stator housing (120) defining an annular receiving portion with a first circumferential wall (122), an annular end wall (124), and a second circumferential wall (126) radially opposite to the first circumferential wall (122),
wherein the stator (110) is arranged at least partially in the annular receiving portion.

11. The stator arrangement (100) of claim 10, wherein the insulation walls (32) are arranged adjacent to the second circumferential wall (126), and wherein the insulation walls (32) axially extend at least over an overlap portion (126a) of the second circumferential wall (126), particularly, wherein the resin body (140) radially fills space between the insulation walls (32) and the second circumferential wall (126) at least over an axial sub-portion of the overlap portion (126a).

12. The stator arrangement (100) of claim 11, wherein the second circumferential wall (126) is formed such that at least at an axial position of the overlap portion (126a) a radial distance (126b) between the insulation walls (32) and the second circumferential wall (126) is at most 2mm, specifically at most 1mm und more specifically at most 0,5mm.

13. An electrical machine (200), particularly electric motor (200), comprising:
a machine housing (210),
a shaft (230) rotatably supported in the machine housing (210),
a rotor (220) fixedly arranged on the shaft (230) in the machine housing (210),
the stator arrangement (100) of any one of claims 10 to 12, wherein the stator (110) is arranged adjacently to the rotor (220) in the machine housing (210).

14. A method (300) for manufacturing a stator arrangement (100) comprising:
providing (310) a plurality of stator tooth units (10) each having a stator tooth (20), an insulation (30) with an insulation wall (32), and a coil (40) wound around the stator tooth (20),
arranging (320) the stator tooth units (10) circumferentially such that the insulation walls (32) conjointly form a closed circumference (112, 114) to thereby form a stator (110), providing (340) a stator housing (120) which defines an annular receiving portion with a first circumferential wall (122), an annular end wall (124), and a second circumferential wall (126) radially opposite to the first circumferential wall (122),
inserting (350) the stator (110) in the annular receiving portion such that an axial portion of the insulation walls (32) is arranged between the first and second circumferential walls (122, 126), and
potting (360) the stator (110) in the stator housing (120) by filling liquid resin between the insulation walls (32) and the first circumferential wall (122) such that after hardening the liquid resin a resin body (140) is formed between the insulation walls (32) and the first circumferential wall (122).

15. The method of claim 14, wherein potting (360) comprises:
pre-potting a first amount of liquid resin to at least partially fill an overlap portion (126a) between the insulation walls (32) and the second circumferential wall (126), wherein
the first amount of liquid resin is at least partially hardened to form a first resin body portion for sealing between the insulation walls (32) and the second circumferential wall (126), and after pre-potting,
filling a second amount of liquid resin between the insulation walls (32) and the first circumferential wall (122) to form a second resin body portion, wherein the first resin body portion and the second resin body portion together form the resin body (140).
